# FASCICULE DE BREVET EUROPEEN

(11) **EP 2 772 168 B1**
(45) Date de publication et mention de la délivrance du brevet: **16.01.2019**
(21) Numéro de dépôt: 14154079.9
(22) Date de dépôt: 06.02.2014
(51) Int. Cl.: A47J 45/10

(54) **Dispositif de préhension amovible d'un récipient culinaire muni de moyens antiretour d'une patte de serrage rotative**
Abnehmbare Greifvorrichtung eines Kochbehälters, die mit Arretierungsmitteln einer drehbaren Klemmlasche ausgestattet ist
Removable gripping device for a food container provided with a backstop means for a rotary clamping tab

(30) Priorité: 27.02.2013 FR 1351707
(43) Date de publication de la demande: 03.09.2014
(73) Titulaire: SEB S.A., 69130 Ecully (FR)
(72) Inventeur: Cuillery, Pascal, 74210 FAVERGES (FR)
(74) Mandataire: Bourrières, Patrice

(56) Documents cités:
- WO-A1-2009/136678
- FR-A1- 2 818 885
- FR-A1- 2 936 403
- US-A- 3 269 765

## Description

L'invention concerne un dispositif de préhension amovible d'un récipient culinaire.

Plus précisément, le dispositif de préhension de l'invention est du type comprenant
- une patte supérieure d'appui interne et une patte inférieure d'appui externe, adaptées pour coopérer de manière à ce que, en position de préhension, la patte supérieure et la patte inférieure soient en appui contre une face interne et contre une face externe de la paroi latérale, respectivement ;
- une patte de serrage mobile en rotation autour d'un axe entre une position desserrée et une position serrée, dans laquelle la patte de serrage est en appui contre la paroi latérale et coopère avec au moins l'une des deux pattes inférieure et supérieure de manière à plaquer la paroi latérale contre l'une au moins de ces deux pattes.

Un dispositif de préhension de ce type est notamment décrit par le document FR 2 936 403. Pour monter le dispositif de préhension sur un récipient, un utilisateur manipule le dispositif de manière à placer la paroi latérale du récipient en appui contre la patte supérieure et contre la patte inférieure. Puis, il serre la patte de serrage qui, par un mouvement de rotation, se rapproche de la patte supérieure et vient en appui contre la paroi du récipient de manière à enserrer celle-ci entre la patte supérieure et la patte mobile de serrage, dans une position de serrage. Le dispositif est alors verrouillé à l'aide d'un doigt de verrouillage. Un tel serrage procure une force de serrage ayant une composante verticale, utile lors de sollicitations dynamiques verticales du récipient, par exemple lors de cuissons sautées ou de retournements de crêpes. La force de serrage peut être limitée car les secousses induites en usage sont directement contrées par la force de serrage. Toutefois, les secousses appliquées à la poêle en usage tendent à écarter la patte mobile de sa position de serrage. Seul le doigt de verrouillage s'oppose à cet effort. Pour éviter l'apparition d'un jeu, il est nécessaire que la position de verrouillage coïncide avec la position de serrage. Or, en pratique, la position de verrouillage est atteinte soit avant, soit après la position de serrage. Dans le premier cas, il apparait un jeu entre la paroi du récipient et le dispositif de préhension. Dans le deuxième cas, cela conduit à un hyperstatisme de la patte mobile de serrage, qui est absorbé par l'élasticité de composants. Malgré tout, si des secousses suffisamment fortes sont appliquées au récipient, ces composants, fortement sollicités, peuvent se comprimer et faire apparaitre un jeu.

Il en résulte que le serrage de parois d'épaisseurs respectives différentes n'est possible qu'en faisant apparaitre un jeu de fonctionnement correspondant à la différence potentielle d'épaisseur entre les différents récipients. Ce jeu peut être rattrapé par un élément élastique. Mais la compression de cet élément élastique induite par des secousses suffisamment fortes peut également conduire à un déchaussage du dispositif de préhension.

De surcroît, l'apparition de jeux entre le dispositif de préhension et le récipient culinaire génère, à faible amplitude, un vieillissement prématuré du revêtement du récipient, au droit de la zone de serrage. Ce revêtement, notamment les émaux, peut aussi être endommagé par des efforts de serrage importants destinés à éviter ces jeux. Enfin à plus forte amplitude, un jeu est susceptible de provoquer au déchaussage du contenant, ce qui pose un problème de sécurité.

La présente invention vient améliorer la situation. À cet effet, l'invention concerne un dispositif de préhension amovible d'un récipient culinaire tel que décrit dans la revendication 1, ledit récipient comportant une paroi latérale, comportant :
- une patte supérieure d'appui interne et une patte inférieure d'appui externe, adaptées pour coopérer de manière à ce que, en position de préhension, la patte supérieure et la patte inférieure soient en appui contre une face interne et contre une face externe de la paroi latérale, respectivement ;
- une patte de serrage mobile en rotation autour d'un axe entre une position desserrée et une position serrée, dans laquelle la patte de serrage est en appui contre la paroi latérale et coopère avec l'une des deux pattes, inférieure et supérieure, de manière à plaquer la paroi latérale contre au moins l'une des pattes ;
- des moyens de déplacement adaptés pour être commandés manuellement entre une position d'ouverture et une position de fermeture et pour entraîner une rotation de la patte de serrage lors du passage de la position d'ouverture à la position de fermeture ; le dispositif comprend des moyens antiretour, distincts des moyens de déplacement, adaptés pour bloquer la rotation de la patte de serrage dans le sens inverse au sens de serrage lorsque ladite patte de serrage est en position serrée.

Ainsi, la patte de serrage en position serrée est empêchée de tourner en sens inverse au sens de serrage par les moyens antiretour. Ceux-ci exercent une action antiretour de la patte de serrage de façon continue, à la différence d'un doigt de verrouillage qui exerce son action de façon incrémentale. Cela limite de façon significative les jeux entre le dispositif de préhension et le récipient. Avantageusement, le dispositif comprend un organe de déblocage adapté pour être commandé manuellement de manière à entraîner les moyens anti-retour d'une position de blocage à une position de déblocage.

Ainsi, pour démonter le dispositif de préhension, il suffit d'actionner manuellement l'organe de déblocage de manière à débloquer les moyens antiretour.

Selon l'invention, les moyens antiretour fonctionnent par arc-boutement. Dans un forme de réalisation particulière, les moyens antiretour comprennent un mécanisme de roue libre.

Le mécanisme de roue libre permet de bloquer simplement et efficacement la rotation de la patte de serrage dans un seul sens, à savoir le sens inverse au sens de serrage.

Avantageusement encore, les moyens antiretour sont adaptés pour bloquer la rotation de la patte de serrage dans le sens inverse au sens de serrage lors de la rotation de la patte de serrage de la position desserrée à la position serrée.

Selon l'invention, les moyens antiretour comprennent des élément roulants interposés entre l'axe de rotation de la patte de serrage, ledit axe étant fixe, et une bague, solidaire en rotation de la patte de serrage et conformée pour être bloquée en rotation dans le sens inverse au sens de serrage par coincement des éléments roulants entre la bague et l'axe de rotation.

Dans ce cas, et avantageusement, les éléments roulants sont portés par une cage reliée à la patte de serrage par des moyens de liaison adaptés pour entraîner en rotation la cage pendant la rotation de la patte de serrage de sa position desserrée à sa position serrée.

Ainsi, le blocage antiretour s'effectue au moyen d'éléments roulants, par exemple des rouleaux ou des billes, qui coopèrent avec une bague solidaire en rotation de la patte de serrage de manière à former un mécanisme de roue libre.

Avantageusement encore, les moyens de liaison entre la patte de serrage et la cage comprennent des moyens élastiques sous l'action desquels les éléments roulants sont maintenus en contact avec la bague pendant la rotation de la patte de serrage de sa position desserrée à sa position serrée. Ainsi, pendant la rotation de la patte de serrage dans le sens de serrage, les éléments roulants suivent le mouvement de rotation en étant en simple contact avec la bague. Cela a pour effet d'interdire une rotation en sens inverse de la patte de serrage car, dans ce cas, les éléments roulants se coinceraient entre la bague et l'axe. Dans une forme de réalisation particulière, il comprend une pièce de verrouillage adaptée pour coopérer avec un doigt solidaire de la cage, de manière à ce que, pendant la rotation de la patte de serrage de sa position desserrée à sa position serrée, le doigt, entraîné en rotation, entraîne en translation dans un premier sens ladite pièce de verrouillage jusque dans une position de verrouillage dans laquelle ladite pièce de verrouillage verrouille les moyens de déplacement en position de fermeture. La pièce de verrouillage permet de verrouiller la fermeture des moyens de déplacement.

Dans ce cas, avantageusement, la pièce de verrouillage ménage une ouverture positionnée de manière à recevoir une tête d'accrochage solidaire des moyens de déplacement lorsque la pièce de verrouillage est en position de verrouillage. La pièce de verrouillage joue ainsi un double rôle de verrouillage/déverrouillage de la fermeture des moyens de déplacement et de déblocage des moyens antiretour.

Avantageusement encore :
- l'organe de déblocage est adapté pour entraîner la pièce de verrouillage dans un mouvement de translation dans un deuxième sens provoquant, par l'intermédiaire du doigt, une rotation de la cage apte à dégager les éléments roulants, le dégagement des éléments roulants provoquant une libération en rotation de la patte de serrage dans le sens inverse au sens de serrage ;
- le dispositif comprend des premiers moyens élastiques de rappel adaptés pour rappeler dans le deuxième sens la pièce de verrouillage, le rappel dans le deuxième sens de la pièce de verrouillage provoquant une libération de la tête d'accrochage ;
- le dispositif comprend des deuxièmes moyens élastiques de rappel adaptés pour rappeler les moyens de déplacement en position d'ouverture après libération de la tête d'accrochage ;
- les éléments roulants sont des rouleaux ;
- les éléments roulants sont des billes ;
- les moyens de déplacement comprennent un doigt poussoir par l'intermédiaire duquel lesdits moyens de déplacement sont adaptés pour entraîner une rotation de la patte de serrage dans le sens de serrage ;
- le doigt poussoir est relié aux moyens de déplacement par l'intermédiaire de moyens élastiques ;
- la patte de serrage est adaptée pour plaquer la paroi du récipient contre la patte supérieure d'appui interne.

L'invention concerne aussi un ensemble comportant un dispositif de préhension tel que précédemment défini et un récipient culinaire.

L'invention sera mieux comprise à l'aide de la description suivante d'un dispositif de préhension amovible d'un récipient culinaire, selon une forme de réalisation particulière, en référence aux dessins annexés sur lesquels :
- La figure 1 représente une vue éclatée du dispositif de préhension, selon une forme de réalisation particulière ;
- Les figures 2 et 3 représentent une vue en perspective du dispositif de la figure 1, en position d'ouverture et en position de fermeture, respectivement ;
- Les figures 4 et 5 représentent une vue latérale d'une partie du dispositif de la figure 3, ouvert selon un plan médian, avec les mécanismes internes au dispositif, en position d'ouverture et en position verrouillée, respectivement ;
- Les figures 6, 7 et 8 représentent une autre vue en coupe latérale d'une partie avant du dispositif de la figure 1 en position d'ouverture, en position de serrage et en position verrouillée, respectivement.

Les figures illustrent un dispositif de préhension amovible 1, couramment appelé « poignée » ou « poignée amovible », selon un premier exemple de réalisation. Le dispositif 1 est destiné à être monté sur une paroi latérale d'un récipient culinaire puis démonté, par un utilisateur, afin de faciliter le rangement du récipient culinaire. Une fois monté sur le récipient culinaire, le dispositif 1 permet de déplacer celui-ci.

Le récipient culinaire peut être une casserole, une poêle, un faitout, une sauteuse, ou tout autre ustensile culinaire susceptible d'être doté d'une poignée de préhension. En toute hypothèse, ce récipient comporte une paroi latérale sur laquelle le dispositif de préhension 1 peut être monté de façon amovible. D'emblée, on notera que, dans la description qui suit, les termes « horizontal », « vertical », « inférieur », « supérieur », « longitudinal », « transversal », « haut », « bas », « avant », « arrière », employés pour décrire le dispositif de préhension 1, font référence à ce dispositif 1 en situation d'usage, lorsqu'il est monté sur une paroi latérale d'un récipient culinaire, lequel est posé sur un plan horizontal.

Le dispositif de préhension 1 comprend un corps de préhension 2, ou manche, s'étendant principalement le long d'un axe longitudinal A1. Ce corps de préhension 2 est ici composé de deux parties latérales 20a, 20b, s'étendant longitudinalement, globalement symétriques l'une de l'autre par rapport à un plan médian vertical (non représenté) d'assemblage, noté PM, contenant l'axe A1. Les deux parties 20a, 20b sont assemblées dans le plan médian PM par vissage, collage, soudage, ou tout autre technique d'assemblage appropriée. Le corps de préhension 2 comprend une partie arrière d'extrémité libre et une partie d'extrémité avant de fixation.

La partie avant de fixation comprend une patte supérieure 3 d'appui interne et une patte inférieure 4 d'appui externe. La patte supérieure 3 prolonge vers l'avant le haut du corps de préhension 2 et est recourbée vers le bas à son extrémité libre avant de manière à former, à l'arrière, une surface d'appui interne 30 destinée à être mise en appui contre une face interne de la paroi latérale d'un récipient. La patte inférieure 4 prolonge le bas du corps de préhension et présente à l'avant une surface d'appui externe 40 destinée à être mise en appui contre une face externe de la paroi latérale d'un récipient.

La surface d'appui interne 30 est ici plane. La surface d'appui externe 40 est légèrement concave de manière à épouser une face externe d'une paroi cylindrique de récipient. On note P1 le plan (non représenté) dans lequel s'étend la surface d'appui interne 30 et P2 le plan (non représenté) tangent à la surface d'appui externe 40 et perpendiculaire au plan médian PM du dispositif 1. Les plans P1 et P2 sont parallèles et légèrement décalés l'un par rapport à l'autre longitudinalement.

L'espace ménagé entre la patte supérieure 3 et la patte inférieure 4, à l'avant du corps de préhension 2, constitue un logement 21 de réception de la paroi latérale d'un récipient culinaire.

Le dispositif 1 comprend également une patte de serrage 5, montée mobile en rotation autour d'un axe 6 solidaire du corps 2, par l'intermédiaire d'un système antiretour 8, qui sera explicité plus loin. L'axe 6 est monté fixe sur le corps de préhension 2, selon une direction transversale (c'est-à-dire orthogonalement au plan médian PM). La patte de serrage 5 comprend un élément avant d'appui 50 et une bague arrière 51, solidaires l'un de l'autre et reliés par l'intermédiaire d'un bras 52. Dans l'exemple décrit ici, l'élément avant d'appui 50, la bague 51 et le bras 52 sont réalisés en une seule pièce monobloc.

L'élément avant d'appui 50 est destiné à être mis en appui contre la face externe de la paroi du récipient et à plaquer cette paroi contre la patte supérieure 3. Il a une forme de portion de cylindre d'axe transversal (orthogonal au plan médian PM), dont la surface convexe est dirigée globalement vers la patte supérieure 3. La bague 51 est de forme ici hexagonale et mobile en rotation autour de l'axe 6. Elle comprend un rebord arrière d'appui 510.

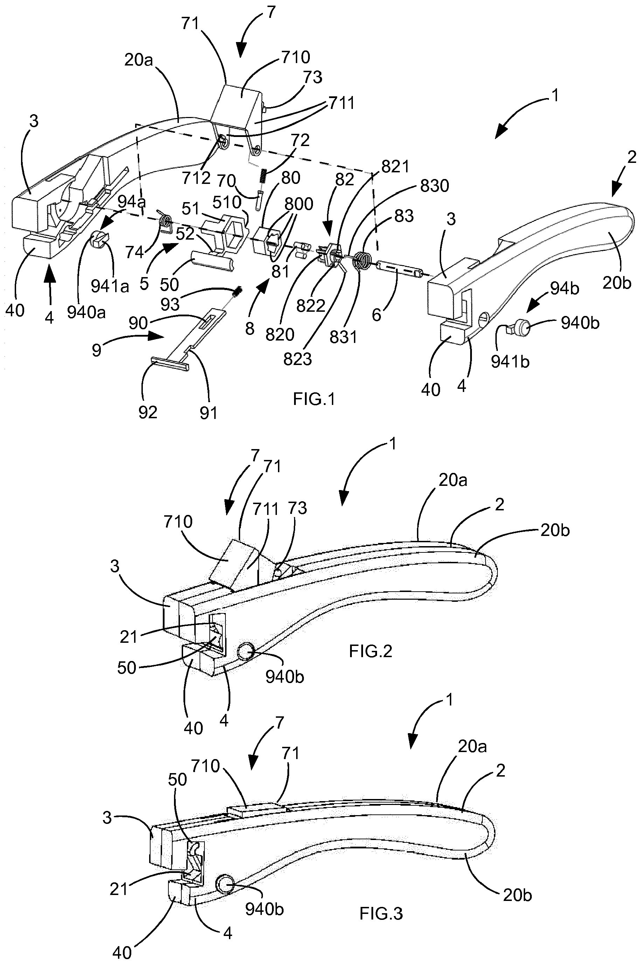

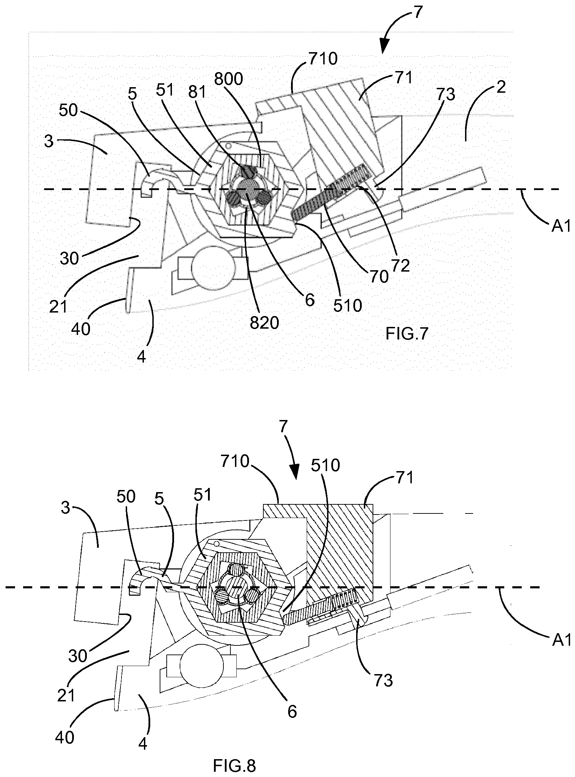

La patte de serrage 5 est mobile en rotation autour de l'axe 6 entre une position desserrée, correspondant à celle représentée sur les figures 2, 4 et 6, et une position serrée, correspondant à celle représentée sur les figures 3, 5 et 8. En position desserrée, l'élément avant d'appui 50 est logé au moins partiellement à l'intérieur d'un renfoncement prévu à l'avant du corps de préhension 2, dans le bas du logement 21, de manière à libérer le logement 21 pour la réception de la paroi d'un récipient. En position serrée, l'élément avant d'appui 50 est rapproché de la patte supérieure 3 de manière à coopérer avec celle-ci pour enserrer la paroi latérale d'un récipient et à plaquer cette paroi contre la patte supérieure 3, comme cela sera décrit plus loin.

Le rebord d'appui arrière 510 est destiné à coopérer avec un doigt poussoir 70 d'un élément de déplacement 7.

L'élément de déplacement 7 comporte en outre un bouton de commande 71 monté pivotant autour de l'axe 6 entre une position d'ouverture et une position de fermeture. Le bouton de commande 71 comportant une surface d'appui supérieure 710, sur laquelle un utilisateur est destiné à exercer une force manuelle d'appui dans un sens de fermeture, par exemple avec un doigt, et deux bras supports latéraux 711 montés rotatifs autour de l'axe 6. Le doigt poussoir 70 est monté sur le bouton de commande 71 par l'intermédiaire d'un ressort de rappel 72. Il est solidaire en rotation du bouton de commande 71. Le doigt poussoir 70 est en appui contre le rebord d'appui 510 de la bague 51. En usage, le pivotement du bouton de commande 71 de sa position d'ouverture à sa position de fermeture entraîne en rotation la bague 51 par l'intermédiaire du doigt poussoir 70 qui pousse le rebord 510. Le bouton de commande 71 comporte également une tête d'accrochage 73 inférieure, faisant saillie sous le bouton de commande 71 en position de fermeture et destinée à verrouiller la fermeture du bouton de commande 71, comme cela sera explicité plus loin. L'élément de déplacement 7 est relié au corps de préhension 2 par l'intermédiaire d'un ressort 74 hélicoïdal de torsion entourant l'axe 6. Le ressort 74 comporte une première extrémité de fixation en appui contre une butée 712, prévue sur la face interne de l'un des bras supports 711, et une deuxième extrémité fixée et solidaire du corps de préhension 2. Le ressort 74 de torsion agit pour rappeler l'élément de déplacement 7 en position d'ouverture.

Le dispositif de préhension 1 comprend également un système antiretour 8. Ce système antiretour 8 comporte une bague 80, des rouleaux 81 (ici trois rouleaux 81), une pièce support 82 et un ressort hélicoïdal de torsion 83.

La bague 80 présente un pourtour externe de forme hexagonale, comportant six faces externes, et est conformée pour s'emboîter dans la bague 51. Par la suite, on appelle « bague externe » la bague 51 et « bague interne » la bague 80. L'intérieur de la bague 80 comporte trois surfaces internes de blocage 800 s'étendant respectivement en regard de trois faces externes, non contigües, de la bague 80. Chacune des surfaces de blocage 800 est légèrement inclinée par rapport à la face externe correspondante. En d'autres termes, la surface de blocage 800 et la face externe correspondante ne sont pas parallèles. Cette inclinaison est destinée à permettre un blocage des rouleaux 81 par coincement entre l'axe 6 et la surface de blocage associée 800.

La pièce support 82 est montée sur l'axe 6. Elle comporte une cage 820 de support des rouleaux 81. La cage 820 est montée à l'intérieur de la bague interne 80 et autour de l'axe 6. Les rouleaux 81 ont une forme de cylindre d'axe transversal (c'est-à-dire orthogonal au plan médian PM et donc parallèle à l'axe 6). Chacun des rouleaux 81 est disposé dans un logement ménagé entre une surface intérieure inclinée de blocage 800 de la bague interne 80 et l'axe 6. Selon la position de la cage support 820 par rapport à la bague 80, le rouleau 81 est soit libre de tourner dans son logement, soit bloqué en rotation par coincement, ou arc-boutement, entre la surface de blocage 800 et l'axe 6 fixe. L'inclinaison des surfaces 800 est adaptée pour que les rouleaux 81 bloquent par coincement l'entraînement en rotation de la bague interne 80 dans un sens inverse au sens de serrage, comme cela sera explicité plus loin.

La cage support 820 est solidaire d'un élément 821 support du ressort 83. Le ressort 83 entoure l'axe 6. Il est solidaire, à l'une de ses extrémités 830, de la bague externe 51 et en appui à son autre extrémité 831 contre une butée 822 portée par l'élément support 821. Le rôle du ressort 83 est de maintenir les rouleaux 81 dans une position de contact avec les surfaces inclinées 800 pendant le déplacement en rotation de la patte de serrage 5, dans le sens de serrage, de la position desserrée à la position serrée.

Les rouleaux 81, la cage support 820, l'axe 6 et la bague 80 constituent les éléments d'une roue libre. Il peut s'agir d'une roue libre à commande d'avance dont les éléments peuvent être fabriqués par la société RINGSPANN®.

La pièce support 82 est également solidaire d'un doigt 823 destinée, lors de l'entraînement en rotation de la pièce 82, à entraîner en translation une pièce de verrouillage 9.

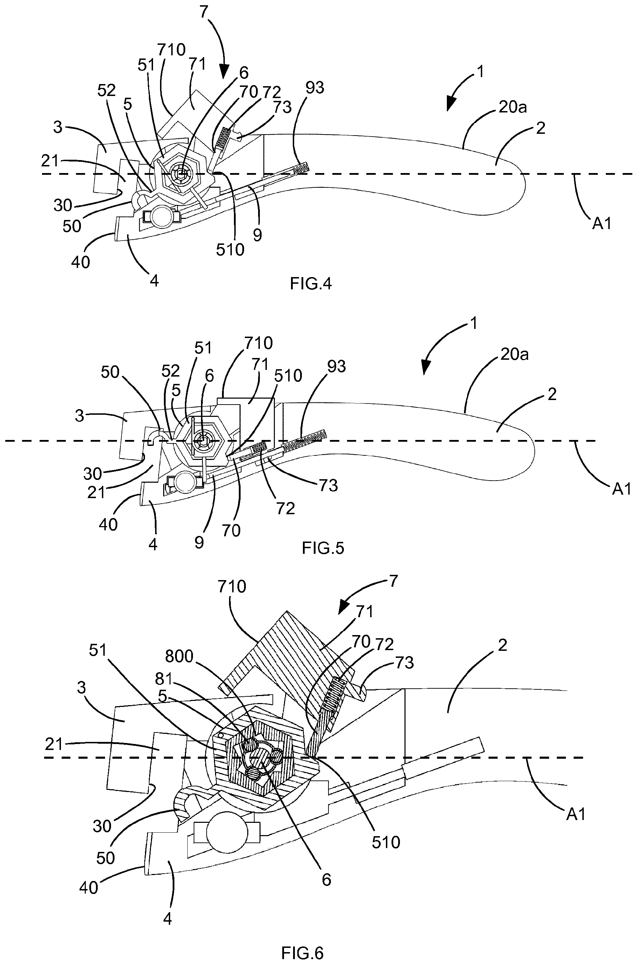

La pièce de verrouillage 9 se présente sous la forme d'une plaque rectangulaire s'étendant au-dessous de la patte de serrage 5. La pièce de verrouillage 9 ménage une ouverture 90 arrière traversante, ou lumière, de réception de la tête d'accrochage 73 inférieure, une encoche 91 avant latérale de réception du doigt 823 et, à son extrémité avant, une barrette 92 transversale de déblocage. La pièce de verrouillage 9 est montée mobile en translation, à l'intérieur du dispositif de préhension 1, entre une position arrière de déverrouillage représentée sur la figure 4 et une position avant de verrouillage représentée sur la figure 5. La pièce de verrouillage 9 est reliée au dispositif de préhension 1 par l'intermédiaire d'un ressort de rappel 93 qui agit pour rappeler la pièce de verrouillage 9 en position de déverrouillage.

Le dispositif 1 comprend également deux éléments de déblocage 94a, 94b destinés à coopérer avec la pièce de verrouillage 9 pour débloquer le système antiretour 8. La pièce de verrouillage 9 et les éléments 94a et 94b forment un organe de déblocage du système antiretour 8. Chaque élément 94a (94b) comporte un bouton de commande 940a (940b) manuelle et une surface inclinée 941a (941b). Les deux surfaces inclinées 941a et 941b, disposées en regard l'une de l'autre, sont symétriques l'une de l'autre par rapport au plan médian PM du corps 2 et s'écartent l'une de l'autre vers l'arrière. Lorsque la pièce de verrouillage 9 est en position avant de verrouillage, les surfaces inclinées 941a, 941b sont, à l'avant, en contact avec les deux extrémités de la barrette 92 et les boutons 940a et 940b font saillie latéralement hors du corps de préhension 2. Dans cette position, lorsqu'un utilisateur appuie sur les boutons 940a et 940b de manière à les pousser vers l'intérieur du dispositif 1, cela a pour effet d'entraîner la pièce de verrouillage 9 en déplacement vers l'arrière, par l'intermédiaire des surfaces inclinées 941a, 941b qui agissent sur la barrette 92. Le déplacement vers l'arrière de la pièce de verrouillage 9 provoque une rotation du doigt 823 entraînant un déblocage du système antiretour 8, comme cela sera explicité plus loin.

On va maintenant décrire en référence aux figures 4-8 le montage et le démontage du dispositif de préhension 1 sur la paroi latérale d'un récipient culinaire.

Initialement, le dispositif de préhension 1 est en position d'ouverture, telle que représentée sur les figures 4 et 6. Dans cette position :
- le bouton de commande 71 est en position d'ouverture, au-dessus du corps de préhension 2, sous l'action de rappel du ressort 74 ;
- la patte de serrage 5 est en position desserrée, l'élément avant d'appui 50 étant positionné dans le bas du logement 21, au voisinage de la patte inférieure 4;
- la pièce de verrouillage 9 est en position arrière de déverrouillage sous l'action de rappel du ressort 93.

Pour monter le dispositif de préhension 1 sur la paroi latérale d'un récipient culinaire, un utilisateur manipule le dispositif 1 de manière à insérer la paroi latérale du récipient dans le logement 21 et à mettre en appui la face interne de la paroi du récipient contre la surface d'appui interne 30 de la patte supérieure 3 et la face externe de la paroi du récipient contre la surface d'appui externe 40 de la patte inférieure 4.

L'utilisateur appuie ensuite sur la surface d'appui 710 du bouton de commande 71 de manière à faire pivoter celui-ci autour de l'axe 6, dans un sens de fermeture, contre l'action de rappel du ressort 74.

L'entraînement en rotation du bouton de commande 71 provoque, par l'intermédiaire du doigt poussoir 70, l'entraînement en rotation de la patte de serrage 5 autour de l'axe 6, dans le sens de serrage, de la position desserrée à une position serrée. En position serrée, l'élément avant d'appui 50 est rapproché de la patte supérieure 3, la paroi latérale du récipient étant enserrée entre la surface d'appui interne 30 de la patte 3 et l'élément avant d'appui 50. Dans cette position, la patte de serrage 5 coopère avec les deux pattes inférieure 3 et supérieure 4 de manière à plaquer la paroi latérale du récipient contre les deux pattes 3, 4. L'élément avant d'appui 50 plaque la paroi du récipient contre la patte supérieure 3 d'appui interne.

La rotation de la patte de serrage 5 s'accompagne de la rotation de la bague externe 51, dans le sens de serrage.

La rotation de la bague externe 51 dans le sens de serrage entraîne la rotation dans le même sens
- de la bague interne 80 et
- de la pièce support 82, par l'intermédiaire du ressort 83.

Le ressort 83 agit également pour maintenir un simple contact permanent entre les rouleaux 81 et la bague interne 80. Dans ce sens de rotation de la patte de serrage 5 (et donc des bagues 51 et 80), les rouleaux sont toutefois autorisés à rouler librement entre la pièce support 82 et la bague interne 80. Une rotation dans le sens inverse au sens de serrage de la bague interne 80, et donc de la patte de serrage 5, serait impossible du fait que les rouleaux 81 seraient coincés contre l'axe 6 par les surfaces inclinées 800. Ainsi, le système antiretour est adapté pour bloquer la rotation de la patte de serrage dans le sens inverse au sens de serrage lors de la rotation de la patte de serrage de la position desserrée à la position serrée.

La rotation de la pièce support 82 entraîne la translation vers l'avant de la pièce de verrouillage 9, par l'intermédiaire du doigt 823 positionné e dans l'encoche 91, contre l'action de rappel du ressort 93, jusque dans une position avant de verrouillage.

Une fois que la patte de serrage 5 a atteint sa position de serrage, les ressorts 72 et 74 continuent de se comprimer, sous l'action d'appui manuel de l'utilisateur, jusqu'à ce que le bouton de commande 71 atteigne sa position de fermeture. Dans cette position, la tête d'accrochage 73 est reçue dans l'ouverture 90 de la pièce de verrouillage 9 de manière à verrouiller la fermeture.

En position serrée, la rotation de la patte de serrage 5 en sens inverse au sens de serrage est rendue impossible par les rouleaux 81 qui seraient alors coincés contre l'axe 6 par les surfaces inclinées 800. On soulignera ici que le blocage n'est pas basé sur la mise en compression d'un élément élastique, mais sur un effet de coincement déclenché dès que la patte de serrage est entraînée dans un mouvement de rotation en sens inverse au sens de serrage. Grâce à cela, aucun jeu n'apparaît en cas de secousses.

Pour démonter le dispositif de préhension 1, l'utilisateur exerce une pression manuelle sur chacun des deux boutons latéraux 94a, 94b de manière à les faire rentrer vers l'intérieur du corps 2. Cette pression s'exerce sur les extrémités latérales de la barrette 92 par l'intermédiaire des surfaces inclinées 941a et 941b. L'inclinaison des surfaces inclinées 941a et 941b induit une force résultante ayant une composante longitudinale qui a pour effet d'expulser la pièce de verrouillage 9 vers l'arrière. L'organe de déblocage est ainsi déplacé d'une position de blocage, dans laquelle les rouleaux 81 sont en contact avec les surfaces 800, à une position de déblocage, dans laquelle les rouleaux 81 sont dégagés, sans contact avec les surfaces 800.

La translation vers l'arrière de la pièce de verrouillage 9 provoque, par le biais du doigt 823, une légère rotation de la pièce support 82 dans le sens inverse au sens de serrage. Cela a pour effet de dégager les rouleaux 81 et, par conséquent, de libérer en rotation la patte de serrage 5 dans le sens inverse au sens de serrage, correspondant au sens d'ouverture du dispositif de préhension.

L'ouverture est finalisée par l'action des ressorts 93 et 74. Le ressort 93 rappelle la pièce de verrouillage 9 qui se déplace en translation vers l'arrière jusqu'en position de déverrouillage. Le ressort 74 de torsion, solidaire du corps de préhension 2, rappelle le bouton de commande 71 en position d'ouverture. Le doigt poussoir 70 n'exerce plus de force de poussée sur la bague 51 de sorte que, la patte de serrage 5, libérée en rotation dans le sens inverse au sens de serrage, revient en position desserrée.

Les rouleaux 81 pourraient être remplacés par d'autres éléments roulants, par exemple des billes, aptes à bloquer la rotation de la bague interne 80 dans le sens inverse au sens de serrage par coincement. La bague 80 comporterait dans ce cas des logements conformés, adaptés à la forme de ces éléments roulants. On pourrait également remplacer la bague 80 et les éléments roulants 81 par tout autre mécanisme de roue libre.

Le système antiretour pourrait également comporter tout autre type de mécanisme adapté pour bloquer la rotation de la patte de serrage 5 en sens inverse au sens de rotation, lorsque la patte 5 est en position serrée et éventuellement lors du serrage.

On soulignera que le dispositif de préhension 1 qui vient d'être décrit procure une force de serrage ayant une composante parallèle à une direction de sollicitation verticale. Grâce à cela, l'effort de serrage nécessaire peut être réduit. En outre, il est doté d'un système antiretour continu qui a pour effet de supprimer les jeux pendant les cuissons sautées ou les retournements de crêpes. Il en résulte une usure limitée du revêtement du récipient, sans sacrifier la sécurité de verrouillage.

## Revendications

1. Dispositif de préhension amovible d'un récipient culinaire, ledit récipient comportant une paroi latérale, comportant :
• une patte supérieure (3) d'appui interne et une patte inférieure (4) d'appui externe, adaptées pour coopérer de manière à ce que, en position de préhension, la patte supérieure (3) et la patte inférieure (4) soient en appui contre une face interne et contre une face externe de la paroi latérale, respectivement ;
• une patte de serrage (5) mobile en rotation autour d'un axe (6) entre une position desserrée et une position serrée, dans laquelle la patte de serrage (5) est en appui contre la paroi latérale et coopère avec l'une des deux pattes, inférieure (4) et supérieure (3), de manière à plaquer la paroi latérale contre au moins l'une des pattes ;
• des moyens de déplacement (7,70) adaptés pour être commandés manuellement entre une position d'ouverture et une position de fermeture et pour entraîner une rotation de la patte de serrage (5) lors du passage de la position d'ouverture à la position de fermeture ;
des moyens antiretour (8), distincts des moyens de déplacement, adaptés pour bloquer la rotation de la patte de serrage (5) dans le sens inverse au sens de serrage lorsque ladite patte de serrage (5) est en position serrée, les moyens antiretour (8) fonctionnant par arc-boutement ; **caractérisé en ce que** les moyens antiretour (8) comprennent des éléments roulants (81) interposés entre l'axe (6) de rotation de la patte de serrage (5), ledit axe étant fixe, et une bague (80), solidaire en rotation de la patte de serrage (5) et conformée pour être bloquée en rotation dans le sens inverse au sens de serrage par coincement des éléments roulants (81) entre la bague (80) et l'axe de rotation (6).

2. Dispositif selon la revendication 1, **caractérisé en ce qu'**il comprend un organe de déblocage (94a, 94b) adapté pour être commandé manuellement de manière à entraîner les moyens anti-retour (8) d'une position de blocage à une position de déblocage.

3. Dispositif selon l'une des revendications précédentes, **caractérisé en ce que** les moyens antiretour (8) comprennent un mécanisme de roue libre.

4. Dispositif selon l'une des revendications 1 à 3, **caractérisé en ce que** les moyens antiretour (8) sont adaptés pour bloquer la rotation de la patte de serrage (5) dans le sens inverse au sens de serrage lors de la rotation de la patte de serrage (5) de la position desserrée à la position serrée.

5. Dispositif selon l'une des revendications 1 à 4, **caractérisé en ce que** les éléments roulants (81) sont portés par une cage (820) reliée à la patte de serrage (5) par des moyens de liaison (83) adaptés pour entraîner en rotation la cage (820) pendant la rotation de la patte de serrage (5) de sa position desserrée à sa position serrée.

6. Dispositif selon la revendication 5, **caractérisé en ce que** les moyens de liaison entre la patte de serrage et la cage comprennent des moyens élastiques (83) sous l'action desquels les éléments roulants (81) sont maintenus en contact avec la bague (80) pendant la rotation de la patte de serrage (5) de sa position desserrée à sa position serrée.

7. Dispositif selon l'une des revendications 5 et 6, **caractérisé en ce qu'**il comprend une pièce de verrouillage (9) adaptée pour coopérer avec un doigt (823) solidaire de la cage (820), de manière à ce que, pendant la rotation de la patte de serrage (5) de sa position desserrée à sa position serrée, le doigt (823), entraîné en rotation, entraîne en translation dans un premier sens ladite pièce de verrouillage (9) jusque dans une position de verrouillage dans laquelle ladite pièce de verrouillage (9) verrouille les moyens de déplacement (7) en position de fermeture.

8. Dispositif selon la revendication 7, **caractérisé en ce que** la pièce de verrouillage (9) ménage une ouverture positionnée de manière à recevoir une tête d'accrochage (73) solidaire des moyens de déplacement (7) lorsque la pièce de verrouillage est en position de verrouillage.

9. Dispositif selon la revendication 2 et l'une des revendications 7 et 8, **caractérisé en ce que** l'organe de déblocage (94a, 94b) est adapté pour entraîner la pièce de verrouillage dans un mouvement de translation dans un deuxième sens provoquant, par l'intermédiaire du doigt, une rotation de la cage apte à dégager les éléments roulants, le dégagement des éléments roulants provoquant une libération en rotation de la patte de serrage dans le sens inverse au sens de serrage.

10. Dispositif selon la revendication 9, **caractérisé en ce qu'**il comprend des premiers moyens élastiques de rappel (93) adaptés pour rappeler dans le deuxième sens la pièce de verrouillage (9), le rappel dans le deuxième sens de la pièce de verrouillage (9) provoquant une libération de la tête d'accrochage (73).

11. Dispositif selon la revendication 10, **caractérisé en ce qu'**il comprend des deuxièmes moyens élastiques de rappel (74) adaptés pour rappeler les moyens de déplacement en position d'ouverture après libération de la tête d'accrochage (73).

12. Dispositif selon l'une des revendications 1 à 11, **caractérisé en ce que** les éléments roulants sont des rouleaux (81).

13. Dispositif selon l'une des revendications 1 à 11, **caractérisé en ce que** les éléments roulants sont des billes.

14. Dispositif selon l'une des revendications 1 à 13, **caractérisé en ce que** les moyens de déplacement (7) comprennent un doigt poussoir (70) par l'intermédiaire duquel lesdits moyens de déplacement (7) sont adaptés pour entraîner une rotation de la patte de serrage (5) dans le sens de serrage.

15. Dispositif selon la revendication 14, **caractérisé en ce que** le doigt poussoir (70) est relié aux moyens de déplacement (7) par l'intermédiaire de moyens élastiques (72).

16. Dispositif selon l'une des revendications précédentes, **caractérisé en ce que** la patte de serrage (5) est adaptée pour plaquer la paroi du récipient contre la patte supérieure d'appui interne.

17. Ensemble comportant un dispositif de préhension selon l'une des revendications 1 à 16 et un récipient culinaire.

## Patentansprüche

1. Abnehmbare Vorrichtung zum Greifen eines Kochgefäßes, wobei das Gefäß eine Seitenwand umfasst, umfassend:
• eine obere innen anliegende Klaue (3) und eine untere außen anliegende Klaue (4), die dafür ausgebildet sind, so zusammenzuwirken, dass in Greifstellung die obere Klaue (3) und die untere Klaue (4) jeweils an einer Innenfläche und an einer Außenfläche der Seitenwand anliegen;
• eine Spannklaue (5), die um eine Achse (6) zwischen einer unverspannten Stellung und einer verspannten Stellung drehbeweglich ist, wobei die Spannklaue (5) an der Seitenwand anliegt und mit einer der zwei Klauen, untere (4) und obere (3), zusammenwirkt, um die Seitenwand an mindestens eine der Klauen zu pressen;
• Verlagerungsmittel (7, 70), die dafür ausgebildet sind, manuell zwischen einer Öffnungsstellung und einer Schließstellung betätigt zu werden, und dafür, beim Übergang von der Öffnungsstellung zur Schließstellung eine Drehbewegung der Spannklaue (5) zu bewirken;
von den Verlagerungsmitteln getrennte Anti-Rückkehrmittel (8), die dafür ausgebildet sind, die Drehbewegung der Spannklaue (5) in die zur Spannrichtung umgekehrte Richtung zu sperren, wenn sich die Spannklaue (5) in verspannter Stellung befindet, wobei die Anti-Rückkehrmittel (8) durch Selbsthemmung funktionieren;
**dadurch gekennzeichnet, dass** die Anti-Rückkehrmittel (8) Rollelemente (81) umfassen, die zwischen der Drehachse (6) der Spannklaue (5), wobei die Achse fest ist, und einem Ring (80) eingefügt sind, der drehfest mit der Spannklaue (5) verbunden und dafür ausgestaltet ist, in der zur Spannrichtung umgekehrten Richtung durch Verklemmen der Rollelemente (81) zwischen dem Ring (80) und der Drehachse (6) gegen Drehbewegung gesperrt zu werden.

2. Vorrichtung nach Anspruch 1, **dadurch gekennzeichnet, dass** sie ein Entsperrglied (94a, 94b) umfasst, das dafür ausgebildet ist, manuell betätigt zu werden, um die Anti-Rückkehrmittel (8) von einer Sperrstellung in eine Entsperrstellung zu versetzen.

3. Vorrichtung nach einem der vorstehenden Ansprüche, **dadurch gekennzeichnet, dass** die Anti-Rückkehrmittel (8) einen Freilaufmechanismus umfassen.

4. Vorrichtung nach einem der Ansprüche 1 bis 3, **dadurch gekennzeichnet, dass** die Anti-Rückkehrmittel (8) dafür ausgebildet sind, die Drehbewegung der Spannklaue (5) in die zur Spannrichtung umgekehrte Richtung bei der Drehbewegung der Spannklaue (5) von der unverspannten Stellung in die verspannte Stellung zu sperren.

5. Vorrichtung nach einem der Ansprüche 1 bis 4, **dadurch gekennzeichnet, dass** die Rollelemente (81) von einem Käfig (820) getragen werden, der mit der Spannklaue (5) über Verbindungsmittel (83) verbunden ist, die dafür ausgebildet sind, den Käfig (820) während der Drehbewegung der Spannklaue (5) von ihrer unverspannten Stellung in ihre verspannte Stellung in Drehbewegung zu versetzen.

6. Vorrichtung nach Anspruch 5, **dadurch gekennzeichnet, dass** die Verbindungsmittel zwischen der Spannklaue und dem Käfig elastische Mittel (83) umfassen, unter deren Wirkung die Rollelemente (81) während der Drehbewegung der Spannklaue (5) von ihrer unverspannten Stellung in ihre verspannte Stellung mit dem Ring (80) in Kontakt gehalten werden.

7. Vorrichtung nach einem der Ansprüche 5 und 6, **dadurch gekennzeichnet, dass** sie ein Verriegelungsteil (9) umfasst, das dafür ausgebildet ist, mit einem drehfest mit dem Käfig (820) verbundenen Stift (823) zusammenzuwirken, sodass während der Drehbewegung der Spannklaue (5) von ihrer unverspannten Stellung in ihre verspannte Stellung der in Drehbewegung versetzte Stift (823) das Verriegelungsteil (9) in eine erste Richtung in Translationsbewegung versetzt bis in eine Verriegelungsstellung, in der das Verriegelungsteil (9) die Verlagerungsmittel (7) in Schließstellung verriegelt.

8. Vorrichtung nach Anspruch 7, **dadurch gekennzeichnet, dass** das Verriegelungsteil (9) eine Öffnung ausspart, die so positioniert ist, dass sie einen drehfest mit dem Verlagerungsmitteln (7) verbundenen Verhakungskopf (73) aufnimmt, wenn sich das Verriegelungsteil in Verriegelungsstellung befindet.

9. Vorrichtung nach Anspruch 2 und einem der Ansprüche 7 und 8, **dadurch gekennzeichnet, dass** das Entsperrglied (94a, 94b) dafür ausgebildet ist, das Verriegelungsteil in eine zweite Richtung in eine Translationsbewegung zu versetzen, die mittels des Stifts eine Drehbewegung des Käfigs hervorruft, welche dazu in der Lage ist, die Rollelemente zu lösen, wobei das Lösen der Rollelemente eine Freigabe der Drehbewegung der Spannklaue in die zur Spannrichtung umgekehrte Richtung hervorruft.

10. Vorrichtung nach Anspruch 9, **dadurch gekennzeichnet, dass** sie erste elastische Rückstellmittel (93) umfasst, die dafür ausgebildet sind, das Verriegelungsteil (9) in der zweiten Richtung zurückzustellen, wobei das Rückstellen des Verriegelungsteils (9) in der zweiten Richtung eine Freigabe des Verhakungskopfs (73) hervorruft.

11. Vorrichtung nach Anspruch 10, **dadurch gekennzeichnet, dass** sie zweite elastische Rückstellmittel (74) umfasst, die dafür ausgebildet sind, die Verlagerungsmittel nach Freigabe des Verhakungskopfs (73) in Öffnungsstellung zurückzustellen.

12. Vorrichtung nach einem der Ansprüche 1 bis 11, **dadurch gekennzeichnet, dass** die Rollelemente Rollen (81) sind.

13. Vorrichtung nach einem der Ansprüche 1 bis 11, **dadurch gekennzeichnet, dass** die Rollelemente Kugeln sind.

14. Vorrichtung nach einem der Ansprüche 1 bis 13, **dadurch gekennzeichnet, dass** die Verlagerungsmittel (7) einen Druckstift (70) umfassen, mittels dem die Verlagerungsmittel (7) dafür ausgebildet sind, eine Drehbewegung der Spannklaue (5) in die Spannrichtung zu bewirken.

15. Vorrichtung nach Anspruch 14, **dadurch gekennzeichnet, dass** der Druckstift (70) mittels elastischer Mittel (72) mit den Verlagerungsmitteln (7) verbunden ist.

16. Vorrichtung nach einem der vorstehenden Ansprüche, **dadurch gekennzeichnet, dass** die Spannklaue (5) dafür ausgebildet ist, die Wand des Gefäßes an die obere innen anliegende Klaue zu pressen.

17. Baugruppe, die eine Greifvorrichtung nach einem der Ansprüche 1 bis 16 und ein Kochgefäß umfasst.

## Claims

1. Device for removably gripping a cooking vessel, said vessel comprising a side wall, comprising:
- an upper internally bearing lug (3) and a lower externally bearing lug (4), suitable for cooperating such that, in the gripping position, the upper lug (3) and the lower lug (4) bear against an inner face and against an outer face of the side wall, respectively;
- a clamping lug (5), mobile in rotation about an axis (6) between an unclamped position and a clamped position, wherein the clamping lug (5) bears against the side wall and cooperates with one of the two lugs, lower (4) and upper (3), so as to flatten the side wall against at least one of the lugs;
- movement means (7, 70) suitable for being controlled manually between an opening position and a closing position and to drive in rotation the clamping lug (5) during the passing from the opening position to the closing position;
- non-return means (8), separate from the movement means, suitable for locking in rotation the clamping lug (5) in the reverse direction to the clamping direction when said clamping lug (5) is in the clamped position, the non-return means (8) functioning by bracing;
**characterised in that** the non-return means (8) comprise rolling elements (81) interleaved between the axis (6) of rotation of the clamping lug (5), said axis being fixed, and a ring (80), secured in rotation to the clamping lug (5) and shaped to be locked in rotation in the reverse direction to the clamping direction by wedging the rolling elements (81) between the ring (80) and the axis of rotation (6).

2. Device according to claim 1, **characterised in that** it comprises an unlocking member (94a, 94b), suitable for being controlled manually so as to drive the non-return means (8) from the locking position to an unlocking position.

3. Device according to one of the preceding claims, **characterised in that** the non-return means (8) comprising a freewheel mechanism.

4. Device according to one of claims 1 to 3, **characterised in that** the non-return means (8) are suitable for locking in rotation the clamping lug (5) in the reverse direction to the clamping direction during the rotation of the clamping lug (5) from the unclamped position to the clamped position.

5. Device according to one of claims 1 to 4, **characterised in that** the rolling elements (81) are carried by a cage (820) connected to the clamping lug (5) by connecting means (83) suitable for driving in rotation the cage (820) during the rotations of the clamping lug (5) from the unclamped position thereof to the clamped position thereof.

6. Device according to claim 5, **characterised in that** the connecting means between the clamping lug and the cage comprise elastic means (83) under the action of which the rolling elements (81) are held in contact with the ring (80) during the rotation of the clamping lug (5) from the unclamped position thereof to the clamped position thereof.

7. Device according to one of claims 5 and 6, **characterised in that** it comprises a locking part (9) suitable for cooperating with a finger (823) secured to the cage (820), such that, during the rotation of the clamping lug (5) from the unclamped position thereof to the clamped position thereof, the finger (823), driven in rotation, drives in translation in a first direction, said locking part (9) to a locking position wherein said locking part (9) locks the movement means (7) in the closing position.

8. Device according to claim 7, **characterised in that** the locking part (9) arranges an opening positioned so as to receive a fastening head (73) secured to the movement means (7) when the locking part is in the locking position.

9. Device according to claim 2 and one of claims 7 and 8, **characterised in that** the unlocking member (94a, 94b) is suitable for driving the locking part in a translation movement in a second direction generating, by way of the finger, a rotation of the cage capable of releasing the rolling elements, the releasing of the rolling elements generating a release in rotation of the clamping lug in the reverse direction to the clamping direction.

10. Device according to claim 9, **characterised in that** it comprises first elastic return means (93) suitable for returning in the second direction, the locking part (9), the return in the second direction of the locking part (9) generating a release of the fastening head (73).

11. Device according to claim 10, **characterised in that** it comprises second elastic return means (74) suitable for returning the movement means in the opening position after release of the fastening head (73).

12. Device according to one of claims 1 to 11, **characterised in that** the rolling elements are rollers (81).

13. Device according to one of claims 1 to 11, **characterised in that** the rolling elements are balls.

14. Device according to one of claims 1 to 13, **characterised in that** the movement means (7) comprise a push-button finger (70) by way of which said movement means (7) are suitable for driving in rotation of the clamping lug (5) in the clamping direction.

15. Device according to claim 14, **characterised in that** the push-button finger (70) is connected to the movement means (7) by way of elastic means (72).

16. Device according to one of the preceding claims, **characterised in that** the clamping lug (5) is suitable for flattening the wall of the vessel against the upper internally bearing lug.

17. Assembly comprising a gripping device according to one of claims 1 to 16 and a cooking vessel.
